# EUROPEAN PATENT APPLICATION

(11) **EP 4 742 646 A1**
(43) Date of publication of application: **13.05.2026**
(21) Application number: 24212397.4
(22) Date of filing: 12.11.2024
(51) Int. Cl.: H04N 1/40

(54) **METHOD AND SYSTEM FOR CONVERTING THE FORMAT OF A GRAPHIC ARTS FILE**

(71) Applicant: Esko-Graphics Imaging GmbH, 25524 Itzehoe (DE)
(72) Inventor: Scheele, Joachim, CH-8105 Regensdorf (CH); Otto, Nils Peter, CH-8105 Regensdorf (CH)
(74) Representative: Müller-Boré & Partner Patentanwälte PartG mbB

(57) **Abstract**

A method for converting files associated with a print job for a flexographic printing plate includes converting a set of one-bit input files associated with the print job and having a first image file resolution, a first screening, a first color gamut, or a combination thereof into a single PDF file having a vector format; and using the PDF file to create a series of one-bit output files that have a second image file resolution, a second screening, a second color gamut, or a combination thereof.

## Description

### FIELD OF THE INVENTION

The present invention relates to printing, more specifically to flexographic printing, and methods, and systems for implementation of such methods, for converting files associated with a print job for a flexographic printing plate.

### BACKGROUND OF THE INVENTION

In flexographic printing prepress technology, plate making companies have backups of old data files in a run-length encoded format, e.g., a so-called LEN format. LEN is a one-bit run-length encoded format that was specially developed for imagers, such as film imagers or, e.g., Cyrel^{®} Digital Imagers. The LEN format usually corresponds to the imager's imaging resolution and determines the positions where an imaging beam is switched on or off. The LEN format was introduced by the predecessors of Esko in the 1980s and has become a common standard in flexographic prepress technology. Plate making companies often store LEN files they have imaged for a long time in case a replacement for a worn-out flexographic printing plate may be needed. In this case, it is desirable to have preferably precisely the same imaging information for the imager without RIPping the input file (i.e. processing the file with a Raster Image Processor (RIP)) again. The most reliable way for this is to use the same LEN file again all the time. For this reason, preferably the LEN files are stored in backup files rather than the PDF input files they were made from. Therefore, some plate making companies have huge data volume of stored LEN files. In some cases, TIFF-format files have been stored instead of LEN files. Both types of files are bitmap files that store a black or white information for each image pixel in a matrix and comprise only information for one printing colour respectively for one flexographic printing plate.

However, with progress in flexographic printing technology, many old imagers have been replaced by newer ones that work with higher imaging resolutions. These new imagers are not capable of imaging the old LEN files that were RIPped with coarser (e.g., lower) imaging resolutions.

In addition, older screens have been replaced by more elaborate screens. For example, in highlight tone areas the fade out is no longer established by decreasing the dot size down to zero. As photopolymer plates do not hold printing dots below a certain size, today fade out is often established by keeping a certain minimum dot size and switching from AM (amplitude modulated) screening to FM (frequency modulated) screening. This method is described in U.S. patent number 11,142,013 B2, for example.

Accordingly, there is a need for a method that allows converting old LEN files that were RIPped for old imagers having a first lower image resolution into a second LEN file having a second higher image resolution that can be imaged by new imagers having higher imaging resolutions.

### SUMMARY OF THE INVENTION

One aspect of the invention is to provide a method for converting a first LEN file having a first lower resolution into a PDF file as an intermediate step. PDF files need less storage space and can be sent more easily over the Internet to other production sites.

As an input file for flexographic printing, PDF files comprise image information in a vector format which allows scaling of the file without any loss in image resolution. In addition, a PDF file can be viewed and processed independently from the platform hardware or software on many different devices.

To adapt these old files, which one day may become a redo job, to an up-to-date workflow it would be beneficial to have a conversion software tool that converts multiple monochrome LEN or TIFF bitmap files belonging to the same print job into one multicolour, vector format, PDF file that can be used again as input file for a second RIPping process.

Thus, it is desirable to provide a method for converting all image files belonging to one set of printing plates from their bitmap-format into one PDF file that stores image information on a vector format.

The following presents a simplified summary of the invention in order to provide a basic understanding of some example aspects of the invention. This summary is not an extensive overview of the invention. Moreover, this summary is not intended to identify critical elements of the invention or to delineate the scope of the invention. The sole purpose of the summary is to present some concepts in a simplified form as a prelude to the more detailed description that is presented later.

One aspect of the invention relates to a method for converting files associated with a print job for a flexographic printing plate. The method comprises converting a set of one-bit input files associated with the print job and having a first image file resolution, a first screening, a first color gamut, or a combination thereof into a single PDF file having a vector format; and using the PDF file to create a series of one-bit output files that have a second image file resolution, a second screening, a second color gamut, or a combination thereof.

In an embodiment, the method further comprises conversion of tone values of rasterised images in a monochrome input file based upon identified tone values of individual screening dots.

In an embodiment, the method further includes converting the input file into a matrix of data points, wherein a center of each individual screening dot represents a data point, identifying data points having identical tone values, identifying contiguous areas of data points having identical tone values, and describing each identified contiguous area in vector format.

In an embodiment, the method further comprises searching for tonal values of the identified screening dots in a library of screening dots.

In an embodiment, the library of screening dots resides in a library of data files belonging to a Raster Image Processor (RIP).

In an embodiment, the identification of screening dots in the one-bit input files is performed using an image recognition algorithm.

In an embodiment, the search for the tonal values of the identified screening dots in the library of screening dots is executed by a search engine platform.

In an embodiment, the search engine platform comprises an Artificial intelligence (AI) supported database search engine platform trained using the library of data files belonging to the RIP, and searched using a supercell dimension configured to define a screen capable of expressing all available tonal values.

In an embodiment, the identification of tone values of the one-bit input files is supported by reading information contained in a file header of the one-bit files.

In an embodiment, the set of one-bit input files is in a LEN format or a TIFF format.

In an embodiment, the method further comprises treating basic shapes comprising solid print areas as clusters of 100% screening dots.

In an embodiment, text characters identified in the one-bit input files are transferred as text characters into the PDF file.

In an embodiment, the text characters are provided with font information.

In an embodiment, the one-bit output files are in a LEN format.

In an embodiment, the first image file resolution is lower than the second image file resolution, the second screening is more elaborate than the first screening, or the second gamut is wider than the first gamut.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
Figure 1 illustrates a transfer of imaging information from TIFF- or PDF-input files to the mask of the flexographic printing plate.
Figure 2 illustrates the principle of vectorization of an image file.
Figure 3 illustrates the principle of calculating a grey tone level based on a single screen dot, according to an exemplary embodiment of the invention.
Figure 4A illustrates the targeted tone values in the image file on the X-axis and the resulting tone value on the Y-axis, according to an exemplary embodiment of the invention.
Figure 4B illustrates the targeted tone values in the image file on the X-axis and the resulting compensated output values on the Y-axis, according to an exemplary embodiment of the invention.
Figure 5 illustrates the principle of calculating a grey tone level based on center points of screening dots that surround a single screen dot, according to an exemplary embodiment of the invention.
Figure 6 illustrates a graphic visualization of a small section of a supercell that defines a screen for all available tonal values.

### DETAILED DESCRIPTION OF THE INVENTION

In flexography, mainly TIFF- or PDF- files are used to transfer the complete imaging information from the design to the process where the flexographic printing plate is created.

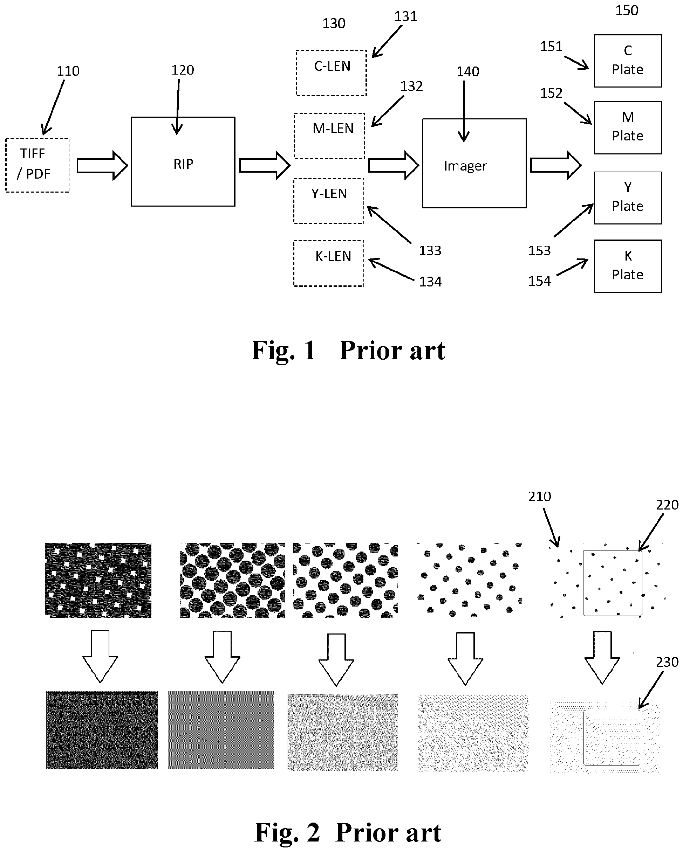

The principle of this transfer is depicted in Figure 1. An input file 110 in PDF or TIFF format comprising the complete colour information of the image to be printed is send to a Raster Image Processor (RIP) 120. The RIP, such as Esko's RIP, Imaging Engine, for example, separates the image information into different colour channels, e.g., cyan, magenta, yellow, and black (CMYK) and afterwards converts the C, M, Y, and K- images into running length encoded LEN output files 130, respectively, for the CMYK colours 131 - 134 or any other number of colours required for the print. The LEN file is sent to an imager 140 which distributes the running length information to different imaging beams and switches the imaging beams on and off according to the image information. The imaging beams are focused to the mask of digital flexographic printing plates 150, respectively, the plates for CMYK colours 151 - 154 or any other number of colours required for the print, whereas portions of the laser ablate-able mask are removed. This process transfers the image information to the mask of the digital printing plates which allows in further consecutive process steps to remove portions of the polymer pates to form 3-dimensional printing structure on the plates.

In some cases, the RIP can produce output files in TIFF format. The TIFF output files are dedicated for imagers other than Cyrel^{®} Digital Imagers (CDIs), for example, or for proofing devices. In any case, the TIFF output files are monochrome. That is, they contain only image information for one colour of the print. This can be, for example, one of the colours cyan, magenta, yellow, or black (CYMK), or other so-called spot colours which are often used for brands, e.g., Coca-Cola^{®} red.

The TIFF output files differ from the input TIFF file in that they have only a fraction of the colour information of the TIFF input file, while the input TIFF file comprises the full colour information.

Usually, several plates for the different process or spot colours of a print job are created for one print job and are printed on top of each other on the print substrate. The combination of the different printouts of different colour results in the full colour image on the completed print. The different colours of a print job are called colour separations.

Some of the Cyrel Digital Imagers (CDIs) are capable of reading TIFF files that comprise only one colour and convert these files into length encoded information that can be directly imaged. Other CDIs only accept LEN file format. Today, the complete workflow from the RIP to the CDI is based on LEN format.

While TIFF and PDF input files for flexographic printing carry the complete colour information for multi colour prints, existing TIFF to PDF converters, such as the one available at https://tiff2pdf.com/de/ , for example, convert only the TIFF bitmap content into the PDF framework and leave the bitmap image information unchanged.

In other cases, so-called vectorizers can convert at least simple geometric figures into a vector format but fail to do this conversion for rasterized image information.

Thus, it is not possible, by means of existing vectorising software to convert monochrome LEN or TIFF files to a PDF file that allows new processing of the PDF file, for example, to RIP the PDF file again and by doing so, change the type of screening or the line count of the screen.

Thus, there is a need for a conversion software that can convert monochrome bitmap information into vector information.

In particular, there is a need for a method that can convert monochrome TIFF or LEN bitmap input files into PDF files in a vector format.

Furthermore, it would be desirable to perform this conversion for all plates corresponding to colours of a print job and combine the resulting vector information of all colours into one PDF file.

Fully automated conversion of the file format as described may be particularly desirable.

Aspects of the invention will now be described by reference to exemplary embodiments and variations of those embodiments. Although aspects of the invention are illustrated and described herein with reference to specific embodiments, the illustrated examples are not intended to be limited to the details shown and described. Rather, various modifications may be made in the details within the scope and range of equivalents of the claims and without departing from the invention. For example, one or more aspects of the disclosed embodiments can be utilized in other embodiments and even other types of devices. Moreover, certain terminology is used herein for convenience only and is not to be taken as a limitation.

One exemplary embodiment relates to back-conversion of rasterized LEN or TIFF image files into a PDF vector format. Therefore, one of the main problems is vectorisation. Vectorisation can be seen as the inversion of rasterising. While many different concepts for vectorisation exist, e.g., colour quantization by median cut, for example, exemplary embodiments of the invention use additional information that is contained in the monochrome LEN and TIFF files which were used for imaging flexographic printing plates. This additional information can improve the vectorization result of a fully automated vectorisation. In many cases, vectorisation of a bitmap image that was created from a photograph results in a much larger data volume. In such cases, vectorization is not desirable. However, for conversion of a rasterized image of a lower screen resolution 1 into a rasterized image of a higher screen resolution 2, for example, it can be advantageous to convert the image into grey tone and optionally to a vector format.

Because generally each LEN or TIFF file for a printing plate comprises only one colour, it can be assumed that only black and white pixels are present in the files.

### Vectorization

The principle of a known vectorization is depicted in Figure 2. Detail 210 is a 5.5 % screen area of a test image file. Detail 220 shows an area of the image file that is examined to determine the ratio of imaged versus non-imaged pixels. According to the ratio, the area is assigned to a certain grey level, e.g., 5.5 % if 55 out of 1000 pixels are black. Detail 230 is the equivalent area that represents the same size of area 220 in a vector format file.

The entire image file is completely segmented into tiles, such as 220, for example, and transferred into tile 230 in a vector format file.

The size of tile 220 is depicted only to visualize the principle. The tiles may be much smaller to increase the resolution of the grey level information in the vector format file. However, pixels of several screening dots should be analysed for a reliable determination of the grey level.

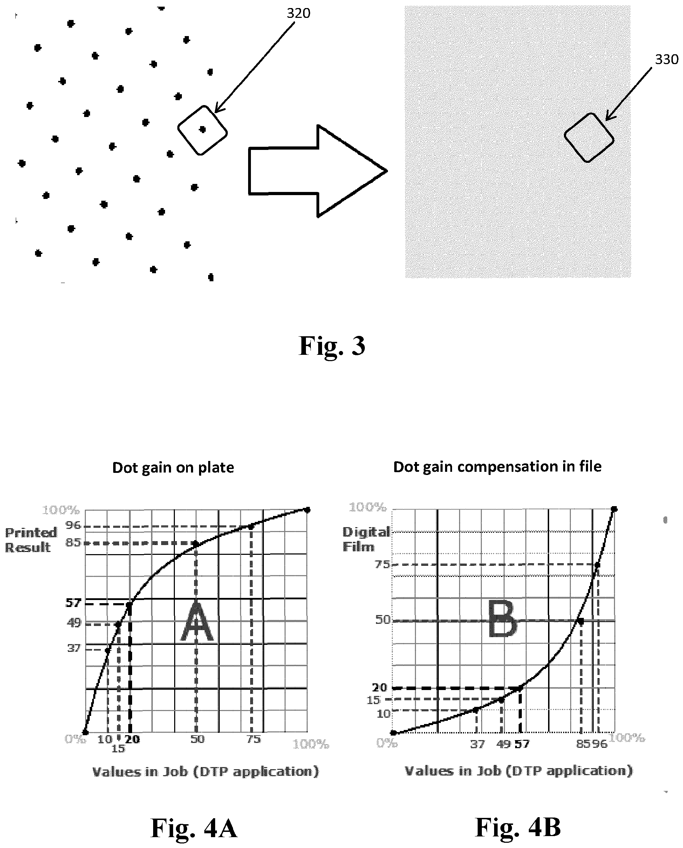

Figure 3 illustrates the principle of calculating a grey tone level based on a single screen dot 320, whereas the tone value of the screen dot is looked up from a screen library in the RIP.

This can be done, for example, by using conventional AI-assisted visual search algorithms known in the art, e.g., using off-the-shelf artificial intelligence (AI) search engine platforms, such as Amazon Rekognition^{™} from Amazon Web Services (AWS); Vision AI^{™} from Google^{®}; or Azure AI Vision^{™} from Microsoft^{®}. The functionality of such off-the-shelf platforms is well known and understood by those of skill in the art, and demonstrated by the functionality demonstrated by, for example, the functionality of the Google Image search engine feature by which users can upload images and search using the content of the uploaded images. The invention is not limited to the use of any particular platform, algorithm, or model. Other embodiments may employ bespoke learning models, built using established vision recognition AI systems, such as the YOLO real-time object detection system. In embodiments, an AI-model employed by the exemplary search engine platform may be trained using the RIP's raster libraries, respectively the raster mountains, using a supercell having a dimension configured to define a screen capable of expressing all available tonal values. For example, use of a 200 x 200 x 1000 supercell, e.g., including 200 x 200 pixels (in the x- and y-direction), in which each pixel has a tonal value between 0 and 1000, can define tonal values in 0.1 % steps.

Raster mountains are stored in proprietary formats and comprise a three-dimensional array of a screening supercell. The supercell defines a rectangular tile comprising a series of screening dots. When multiple supercells are placed next to each other, they create a seamless screening area.

The supercell defines the position (e.g., x and y coordinates) and the number (z) of the screen dot pixels for a particular line count, screen angle, and image file resolution.

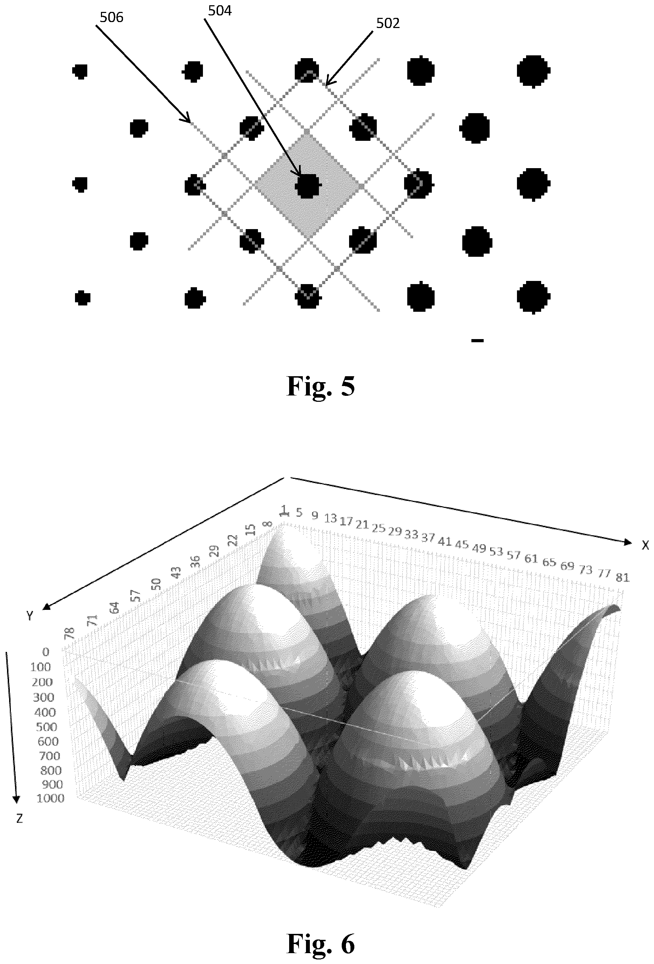

Figure 6 is a graphic visualization of a small section of such a supercell, each of which constitutes a data array. The z-direction in Figure 6 corresponds to the tonal value at the grey level of the raster mountains visualisation. Low values of z (shown almost white in Figure 6) correspond to small tonal values as used in highlight regions. High values of z (depicted in dark grey in Figure 6) correspond to high tonal values, such as solid or shadow areas, for example.

If the supercell is known, the AI can identify any screen dot by knowing the surrounding screening dots, even if the surrounding screening dots may have other tonal values.

The same or a similar approach can also work for images of screening dots taken from the input file. However, instead of the equivalent screen dot from the library, the screen type and tonal value of the pictured dot can be delivered by the search engine.

Use of AI can be helpful when dealing with more complex screens, such as FM or organic screens, for example. By overviewing the content of the screening supercells, any printing screen dot in the supercell can be identified.

The search engines can look for identical screening dots in the screen libraries of the RIP that generated the raster file. This search can be supported and confirmed by reading the tags that most LEN files carry in their file header.

### Raster Mountains

In the RIP libraries, printing dots are defined by a so-called Rasterberg or raster mountain. This is a 3-dimensional matrix that defines the size of screening dots with respect to the grey tone level they represent. The technical background of raster mountains is described in various patent applications of the Rudolf Hell GmbH, such as German patent application number DE2827596C2, for example.

The purpose of raster mountains is to convert grey tone level images, such as a photography, for example, into one-bit images. Depending on the grey tone level, certain pixels in the matrix are switched on or off. With increasing grey tone level more pixels are turned on. If, for example, the highest grey tone level represents 100 % colour, for example, all pixels are turned on and would produce in case of a flexographic printing plate a 100% solid area that transfers the highest possible amount of ink. In case the grey tone level is only 10%, for example, only 10 % of the pixels in the matrix are turned on and therefore, this portion of the flexographic printing plate will comprise only 10% of printing surface.

While modern RIPs use raster mountains more elaborate than those described in the above-cited patent application, the general principle remains the same. Thus, every RIP relies on libraries of raster mountains which are called screen libraries.

Exemplary embodiments of the invention reverse the use case of raster mountains and use the raster mountain for calculating grey tone levels from numbers of pixels. In this concept, each single screen dot in an area comprising screening is analysed. Based on the number and placement of the pixels the screen dot comprises, it is looked up in the screen library and the tonal value the screen dot represents is calculated. While search engines can scan all screen libraries for a particular printing dot profile, this search can be simplified and accelerated if the library that was used to create the printing dots is known.

### LEN file header

LEN and TIFF files for imaging flexographic printing plates include tags in the file header that comprise information about the image and certain handling instructions. This information is useful for the conversion to PDF. In the first step of vectorizing LEN files, the file header is analysed. The image tags can for example comprise information about:
1. Image size in y and y direction in mm
2. Image resolution in DPI
3. Scaling applied in X or Y direction
4. Image rotation
5. Distortion in Circumference direction
6. Screen angle
7. Screen line count
8. Print colour
9. Dot shape of screen
10. Name of Dot Gain Curve applied for dot gain compensation

While the parameters 1 - 7 are simple dimension parameters, the parameters 8 - 10 are more specific and require detailed knowledge of, for example, how the dot shape of a screen is designed for the different tonal values. This knowledge allows allocation of a specific tonal value to any screen area in the image to be analysed.

Because only a very small portion of a screen image area is sufficient to recognize the tone value of this portion, it is possible to divide the LEN file into much smaller segments 320 of Figure 3, compared to the prior art approach depicted in Figure 2, and calculate very detailed curves of equal tonal values, which is one of the basic tasks in vectorization. Figure 5 illustrates the principle of calculating a grey tone level based on the center points of eight screening dots that surround a single screen dot, according to an exemplary embodiment of the invention. In Figure 5, the square 502 determines the center points of eight screening dots that surround one dot 504 in the middle of the square 502. Using lines 506 allows determination of an area that represents the maximum number of pixels available for one screen dot. This allows calculation of the grey tone level for the one screen dot 504 in the middle. However, these calculations may be complicated when made for every screen dot. The calculations may be less complicated if it can be assumed that every screen dot belongs to the same type of screen. However, this information may not be available except in the LEN file header. In most cases, it can be assumed that contiguous screen areas belong to the same type of screening. A more complicated embodiment involves a stochastic FM screen, in which dots are not placed on a regular grid pattern. Nevertheless, if the supercell is known, any screen dot can be identified by the shape of the surrounding screening dots.

From this high number of data points it is easier to detect a tonal gradient in the examined image area as it would occur in a designed artwork, e.g., a logo or whether there is a random distribution of tonal jumps as they occur in an image derived from a photography. In case of tonal gradients, further simplification of the image information in the vector file may be possible.

In addition to the detection and conversion of image areas, basic shapes such as circles, rectangles, lines, and curves, for example, can be detected and converted into vector format using any technique (e.g. edge detection and feature extraction algorithms) known in the art. For example, one exemplary algorithm, owned by Esko Software BV, an affiliate of the Applicant, titled METHOD AND SYSTEMS FOR CONVERTING FILL TO STROKE IN A GRAPHICS FILE, EP Application. Ser. No. 24165727.9, and any published applications claiming priority therefrom, incorporated herein by reference, may be used for converting line art to a vector format.

In one exemplary embodiment of the invention, basic shapes are treated as clusters of 100% screening dots.

The operation instructions for vectorizing a one-bit image file, according to this exemplary embodiment of the invention, can include:
1. Identify screening dots in an input LEN file.
2. Search for identical screening dots (e.g. same size dots for AM screens that are of the same line count as the screen in the input LEN file) in a screening library of the RIP.
3. Determine the tone value of each screening dot identified in the library of the RIP.
4. Assign a tone value to every screening dot in the input file.
5. Treat 100% areas of the input file as clusters of screening dots having 100% tone value.
6. Convert the input file into a matrix of data points whereas the centre of every screening dot represents a data point.
7. Identify data points having identical tone values.
8. Identify contiguous areas of data points having identical tone values.
9. Describe each contiguous areas of step 8 in vector format.

Another exemplary embodiment of the invention uses optical character recognition (OCR) to identify text in the LEN file and embed the text information into the PDF file. Additionally, the font information of the detected text is embedded into the PDF file.

In a second step of vectorizing LEN files, the letters of the identified text are compared to libraries of text fonts to identify the font that was used in the original design. After the font has been identified, it is also included into the PDF file.

### Colour recognition

In another exemplary embodiment of the invention, the tone values of identical spots (i.e. having the same xy coordinates) in all images of the different colour separations that belong to one print job are combined to calculate a common colour value for each individual spot. This calculation is the last step for combining the multitude of colour separations into one file that can be stored in PDF format and later split up again into different colour separations in a future rasterizing process.

This future rasterizing process can create new colour separation that may be different from the existing colour separations. For example, if the former print job comprised CMYK and one spot colour, the new job may use a 6-colour ink press setup that is able to replace any brand-specific spot colour. This approach has the advantage that the printer can always use the same colours without the need for changing spot colours.

### Dot Gain Compensation

One problem when recalculating bitmap back to vector format is dot gain compensation in the bitmap file. In flexographic printing, especially, midtones usually print heavier than they are supposed to. This effect is called dot gain, and it is usually compensated by reducing the size of the midtone dots by means of a so-called dot gain compensation curve. That is, all LEN files have a reduced size of the midtone dots. The principle of dot gain and the required dot gain compensation is depicted in Figure 4A and 4B. Figure 4A shows the targeted tone values in the image file on the X-axis and the resulting tone value on the Y-axis. In Fig. 4B, the tone values of the input image file are shown on the X-axis, while the Y-axis shows the compensated output values.

Dot gain depends on many variables, e.g., polymer type, plate thickness, press setup, ink volume, the curves can differ from one print job to another and even inside the same print job different colour separations can have different dot gain compensation. Obtaining the original tonal values after conversion into the final PDF involves back-calculating the original tonal values, for which it is desirable to have the dot gain curve (DGC) applied during the LEN file creation.

In many cases, different DGC curves were applied to the different colour separations of a print job.

Therefore, ideally, the DGC curves are restored for every colour separation of a print job.

There are different approaches for restoring the original tone values.

In a first approach, the dot gain curve or the name of the curve that was used is noted in the file header of the LEN file. In many cases, the curve can be restored from data backup files.

In a second approach, when no information about the DGC file can be found, the curve can be recalculated from reference test patterns on the plates. Reference test patterns comprise small screen areas of defined tone values which are used to proof how exact tone values in the print match the targeted tone value. They may have, for example, test fields of 5, 10, 25, 50, 75 and 95 % tone value. As they were RIPped together with the print image file, the same DGC was applied to the test fields. This changes the tone values in the file, e.g., according to the Table below:

| Targeted Test Field for print | Actual Test Field in file |
|---|---|
| 0 | 0 |
| 5 | 3 |
| 10 | 6 |
| 25 | 12 |
| 50 | 25 |
| 75 | 52 |
| 95 | 90 |
| 100 | 100 |

Thus, the tone values measured in the LEN file when compared to their known target values before the DGC was applied provide a row of support points that can be used to reconstruct the DGC. With this DGC the original tone values can be calculated for the data points.

In a third approach, when no DGC-name in the LEN-file header and/or no suitable test patterns in the image file are available, it is still possible to look for other print jobs on file that contain DGC information and that were made for the same customer and printing press, were made on the same type and thickness of plate and at a time just 2 or 3 months before or after the plates in question.

An artificial intelligence (AI) model that is adequately trained with a wide database in graphic arts may be used to remove the effects of DGCs after the colour separations of a print job have been vectorized and combined into one PDF. In this case, AI may calculate the curves that correct the colour shifts of the images in the PDF caused by DGCs wherein the changes are exclusively made in the PDF image. For example, the AI model can be trained to analyze and learn the colour shift effects of dot gain compensation in the processed colour LEN files on the multi colour PDF. By teaching the effect of different compensation curves to the multicolor image, the system can be able to recognize certain compensation curves by their colour shift. As the targeted colour is unknown, the system can refer to an object of known colour properties, such as the sky in an image is known to be blue, sunflowers are known to be yellow, car tires are known to be black, etc., for example. This may require the guidance of a retoucher to tailor the result to the client's requirements.

For a complete automation of the conversion process, AI can support the search for data described above, such as, for example, the research for similar print jobs that can provide the DGC-curve, the search for certain screening dots in the screen libraries, or for test patterns in the image files that can be used to calculate the DGCs.

Converting a first LEN-file into a second LEN-file facilitates changing the image file resolution (typically from coarse to finer resolution), use of a different (typically more elaborate) screening, and/or creation of another set of colour separations for the print job (e.g., to have a wider colour gamut). By way of example, "non-elaborate" screens can be, e.g., standard circular dot screenings without any surface screen effects. "Elaborate" in the context of the present disclosure means screens that comprise surface screening, such as are described in U.S. Pat. No. US11142013B2, titled METHOD FOR SMOOTHER TONAL RESPONSE IN FLEXOGRAPHIC PRINTING, incorporated herein by reference, and patterns selectable in Esko software (e.g. MCWSI, MG 25), or comprise transitions from AM to FM in the highlight fade-out areas, such as the ESKO^{®} Crystal^{™} screen, for example. Another example is the spiral screen approach made by Agfa (WO2020221684) or the ESKO^{®} Quartz^{™} screen based on DDWSI surface screen and stochastic screening.

It should be understood that AI-supported reconversion of LEN (or other bitmap, such as TIFF files into PDF vector format is not limited to the examples given above.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A method for converting files associated with a print job for a flexographic printing plate, the method comprising:
converting a set of one-bit input files associated with the print job and having a first image file resolution, a first screening, a first color gamut, or a combination thereof into a single PDF file having a vector format; and
using the PDF file to create a series of one-bit output files that have a second image file resolution, a second screening, a second color gamut, or a combination thereof.

2. The method according to claim 1, further comprising conversion of tone values of rasterised images in a monochrome input file based upon identified tone values of individual screening dots.

3. The method of claim 2, including converting the input file into a matrix of data points, wherein a center of each individual screening dot represents a data point, identifying data points having identical tone values, identifying contiguous areas of data points having identical tone values, and describing each identified contiguous area in vector format.

4. The method of claim 2, comprising searching for tonal values of the identified screening dots in a library of screening dots.

5. The method according to claim 3, wherein the library of screening dots resides in a library of data files belonging to a Raster Image Processor (RIP).

6. The method according to any one of the foregoing claims, wherein the identification of screening dots in the one-bit input files is performed using an image recognition algorithm.

7. The method according to any one of claims 4-6, wherein the search for the tonal values of the identified screening dots in the library of screening dots is executed by a search engine platform.

8. The method according to claim 7, wherein the search engine platform comprises an Artificial intelligence (AI) supported database search engine platform trained using the library of data files belonging to the RIP, and searched using a supercell dimension configured to define a screen capable of expressing all available tonal values.

9. The method according to any one of the previous claims, wherein the identification of tone values of the one-bit input files is supported by reading information contained in a file header of the one-bit files.

10. The method according to any of the previous claims, wherein the set of one-bit input files is in a LEN format or a TIFF format.

11. The method according to any of the previous claims, further comprising treating basic shapes comprising solid print areas as clusters of 100% screening dots.

12. The method according to any of the previous claims, wherein text characters identified in the one-bit input files are transferred as text characters into the PDF file.

13. The method according to claim 12, wherein the text characters are provided with font information.

14. The method according to any of the previous claims, wherein the one-bit output files are in a LEN format.

15. The method according to any of the previous claims, wherein the first image file resolution is lower than the second image file resolution, the second screening is more elaborate than the first screening, or the second gamut is wider than the first gamut.
